# EUROPEAN PATENT APPLICATION

(11) **EP 4 579 893 A1**
(43) Date of publication of application: **02.07.2025**
(21) Application number: 22962333.5
(22) Date of filing: 18.10.2022
(51) Int. Cl.: H01M 50/107, H01M 50/559, H01M 50/627, H01M 50/636

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: CHEN, Shengwang, Ningde, Fujian 352100 (CN); GUO, Zhijun, Ningde, Fujian 352100 (CN); WANG, Peng, Ningde, Fujian 352100 (CN)
(74) Representative: Gong, Jinping
(86) International application number: PCT/CN2022/125965
(87) International publication number: WO 2024/082141

(57) **Abstract**

The embodiments of the present disclosure provide a battery cell, battery, and electrical device, relating to the field of battery technology. The battery cell comprises a casing, an electrode assembly, an electrode terminal, and a sealing component. The casing is provided with a wall portion, and the electrode assembly is accommodated inside the shell. The electrode terminal is arranged on the wall portion. The electrode terminal is provided with a stepped hole. Along the thickness direction of the wall portion, the electrode terminal is provided with a first surface that is farthest from the electrode assembly. The stepped hole comprises a first hole segment and a second hole segment that are continuously arranged. The first hole segment is arranged on the first surface, and the second hole segment is arranged on a side of the first hole segment that is closer to the electrode assembly. The sealing component is at least partially positioned within the second hole segment, and the sealing component is welded and connected to the electrode terminal, forming a welding portion at the welding location. The first hole segment is configured to accommodate at least a portion of the welding portion so that the welding portion does not protrude from the first surface. The battery cell with such a structure has the ability to achieve a stable electrical connection with external components, and thus a stable electrical connection between external components and the electrode terminal can be achieved.

## Description

### Technical Field

The present disclosure relates to the technical field of battery, in particular to a battery cell, battery, and electrical device.

### Background Art

Batteries are widely used in electronic devices, such as mobile phones, laptops, electric bikes, electric cars, electric planes, electric ships, electric toy cars, electric toy boats, electric toy planes, and electric tools, etc.

The battery cell, as an energy storage component, generally undergoes a chemical reaction through the electrode assembly and the electrolyte to generate electrical energy. The battery cell is usually connected to external components to output electrical energy. Therefore, the battery cell needs to have the ability to maintain a stable electrical connection with external components. How to achieve a stable electrical connection between the battery cell and external components is a pressing technical issue in battery technology.

### Summary

The embodiments of the present disclosure provide a battery cell, battery, and electrical device, which can achieve a stable electrical connection between the battery cell and external components.

In the first aspect, the embodiments of the present disclosure provide a battery cell comprising a casing, an electrode assembly, an electrode terminal, and a sealing component. The casing is provided with a wall portion; wherein the electrode assembly is accommodated within the casing. The electrode terminal is arranged on the wall portion, and the electrode terminal is electrically connected to the electrode assembly. The electrode terminal is provided with a stepped hole, wherein along a thickness direction of the wall portion, the electrode terminal is provided with a first surface that is backed and furthest away from the electrode assembly. The stepped hole comprises a first hole segment and a second hole segment that are continuously arranged. The first hole segment is arranged on the first surface, and the second hole segment is arranged on a side of the first hole segment closer to the electrode assembly. The sealing component is at least partially positioned within the second hole segment, and the sealing component is welded and connected to the electrode terminal, forming a welding portion at the welding location. The first hole segment is configured to accommodate at least a portion of the welding portion so that the welding portion does not protrude from the first surface.

In the above technical solution, the first hole segment of the stepped hole can accommodate the welding portion generated by the welding of the sealing component to the electrode terminal, ensuring that the welding portion does not protrude from the first surface of the electrode terminal. Therefore, the external components are less likely to be affected by the welding portion when pressed against the first surface, allowing for an increased contact area between external components and the first surface. This results in an improvement in the firmness of the connection between external components and the electrode terminal, and thus a stable electrical connection between external components and the electrode terminal can be achieved, ensuring a stable current flow between the electrode terminal and external components.

In some embodiments, the sealing component comprises a main body region and an edge region. The edge region is arranged around the main body region. The welding portion is connected to the edge region, protruding at least partially from a bottom surface of the first hole segment. The sealing component is secured to the electrode terminal by welding the welding portion to both the edge region and a bottom surface of the first hole segment. During welding, the welding can be performed along the edge of the edge region, thus enhancing welding efficiency.

In some embodiments, along the thickness direction, the edge region is provided with a second surface that is facing away and farthest away from the electrode assembly, wherein the second surface is aligned with the bottom surface of the first hole segment. In this way, it is ensured that there is no portion of the edge region protruding from the bottom surface of the first hole segment. The second surface is further away from the first surface, allowing the welding portion to be further away from the first surface and further reducing the risk of the welding portion protruding from the first surface.

In some embodiments, along the thickness direction, the edge region is provided with a second surface that is facing away and farthest away from the electrode assembly, wherein the second surface is arranged between the first surface and the bottom surface of the first hole segment. In this way, a portion of the edge region protrudes from the bottom surface of the first hole segment, which is advantageous during welding as it facilitates the recognition of the outer contour of the edge region by welding equipment. This enhances welding efficiency and quality.

In some embodiments, the edge region is provided with a first outer peripheral surface connected to the second surface, and the welding portion is connected to the first outer peripheral surface and the bottom surface of the first hole segment. During welding, the welding equipment can determine the welding position by recognizing the first outer peripheral surface of the edge region, thus improving welding efficiency and quality. Due to the connection of the welding portion to the first outer peripheral surface and the bottom surface of the first hole segment, it is possible to improve the firmness of the edge region after it is connected to the welding portion and the electrode terminal.

In some embodiments, along the thickness direction, a distance between the second surface and the bottom surface of the first hole segment is denoted as H₁, satisfying: H₁≤0.1mm. If H₁ > 0.1mm, the distance between the second surface and the bottom surface of the first hole segment is too large, and the distance between the second surface and the first surface is too small. After welding the edge region to the electrode terminal, there is a risk of the welding portion protruding from the first surface. However, with H₁≤0.1mm, the second surface is further away from the first surface, further reducing the risk of the welding portion protruding from the first surface.

In some embodiments, a distance between the second surface and the first surface is denoted as H₂, satisfying: H₂≥0.1mm. If H₂ < 0.1, the distance between the second surface and the first surface is relatively small, posing a risk of the welding portion protruding from the first surface after welding the edge region to the electrode terminal. However, with H₂≥0.1mm, the second surface is further away from the first surface, further reducing the risk of the welding portion protruding from the first surface.

In some embodiments, along the thickness direction, the main body region is provided with a third surface that is backed from the electrode assembly, and the third surface is a surface of the sealing component farthest from the electrode assembly. The third surface is aligned with the first surface, or the third surface is closer to the electrode assembly than the first surface. In this way, the main body region does not protrude from the first surface, allowing for external components to contact the first surface over a large area. Additionally, the third surface is aligned with the first surface, and both the third surface and first surface can come into contact with external components, thus increasing the current flow area between the battery cell and external components.

In some embodiments, the sealing component is provided with a groove that is recessed from the third surface toward the direction closer to the electrode assembly. The groove is provided around the main body region and the edge region is provided around the groove. The arrangement of the groove can reduce the impact on the main body region when the edge region is welded to the electrode terminal. The groove can release the welding stress generated during the welding of the edge region to the electrode terminal, thus reducing the risk of deformation of the main body region and ensuring the smoothness of the third surface.

In some embodiments, the welding portion is a ring-shaped structure provided around the edge region. This enhances the firmness of the edge region and the electrode terminal after welding and enables a seal between the edge region and the electrode terminal.

In some embodiments, along the thickness direction, the sealing component is provided with a third surface that is facing away and farthest away from the electrode assembly. The third surface is aligned with the first surface, or the third surface is closer to the electrode assembly than the first surface. In this way, the sealing component does not protrude from the first surface, allowing for external components to contact the first surface over a large area. Additionally, the third surface is aligned with the first surface, and both the third surface and first surface can come into contact with external components, thus increasing the current flow area between the battery cell and external components.

In some embodiments, along the thickness direction, a distance between the bottom surface of the first hole segment and the first surface is denoted as H₃, satisfying: H₃≥0.1mm. If H₃ < 0.1mm, the depth of the first hole segment is relatively shallow, posing a risk of the welding portion protruding from the first surface. However, with H₃≥0.1mm, the depth of the first hole segment becomes deeper, further reducing the risk of the welding portion protruding from the first surface.

In some embodiments, a hole side surface of the second hole segment is inclined, and the hole side surface of the second hole segment is provided at an obtuse angle to a bottom surface of the second hole segment. This reduces the difficulty of accessing the sealing component into the second hole segment and facilitates providing the sealing component into the second hole segment, thus improving the efficient arrangement of the sealing component.

In some embodiments, the hole side surface of the second hole segment is connected to the bottom surface of the first hole segment and forms a sharp angle at the connection position. The connection position between the hole side surface of the second hole segment and the bottom surface of the first hole segment facilitates recognition by welding equipment. When welding the sealing component to the electrode terminal, the sharp angle can serve as a capture position for the welding equipment. The welding equipment can determine the welding position based on the pointed angle, thereby improving welding efficiency and welding quality.

**In** some embodiments, the hole side surface of the second hole segment is a conical surface. The conical second hole segment has a simple structure and is easy to process.

**In** some embodiments, an outer peripheral surface of the sealing component comprises an inclined surface, and the inclined surface is arranged by facing toward the hole side surface of the second hole segment. This structure allows more parts of the sealing component to be accommodated within the second hole segment.

**In** some embodiments, along the thickness direction, the sealing component is provided with an abutting surface, wherein the abutting surface abuts against the bottom surface of the second hole segment. The angle between the abutting surface and the inclined surface is denoted as θ₁, and the angle between the hole side surface of the second hole segment and the bottom surface of the second hole segment is denoted as θ₂, satisfying θ₁ > θ₂. This structure ensures that the gap between the hole side surface of the second hole segment and the inclined surface of the sealing component gradually increases along the depth direction of the second hole segment. This allows the sealing component to abut against the bottom surface of the second hole segment, ensuring proper arrangement of the sealing component.

In some embodiments, the stepped hole also comprises a third hole segment, and the third hole segment is arranged on the bottom surface of the second hole segment. The sealing component abuts against the bottom surface of the second hole segment. The arrangement of the third hole segment can reduce the thickness of the electrode terminal in the region configured for connecting to internal components of the battery cell (such as tabs or current collector components). This facilitates the welding of the connection region and the internal components, enhancing the strength of the weld between them.

**In** some embodiments, along the thickness direction, the electrode terminal is provided with a fourth surface facing and closest to the electrode assembly. The electrode terminal is provided with a dielectric injection hole, with one end of the dielectric injection hole extending to the fourth surface, and the other end of the dielectric injection hole communicating with the stepped hole. The dielectric injection hole is configured to inject electrolyte into the interior of the battery cell. The dielectric injection hole facilitates the convenient injection of electrolyte into the interior of the battery cell. After injecting electrolyte into the interior of the battery cell, the dielectric injection hole can be sealed by the sealing component, thus reducing the risk of electrolyte flowing out of the battery cell through the dielectric injection hole.

**In** some embodiments, the electrode terminal comprises a main body portion, a first limiting portion, and a second limiting portion. Along the thickness direction, the first limiting portion and the second limiting portion are connected to both ends of the main body portion, respectively. The main body portion passes through the wall portion, and the wall portion is at least partially located between the first limiting portion and the second limiting portion to restrict the movement of the electrode terminal relative to the wall portion. The first surface is a surface of the first limiting portion facing away from the second limiting portion. In this way, radial and axial constraints on the electrode terminal can be achieved, thus securing the electrode terminal to the wall portion.

In some embodiments, the casing comprises a shell and an end cap. The shell comprises a side wall and a wall portion that are integrally molded. The side wall surrounds the wall portion, and along the thickness direction, the wall portion is arranged at one end of the side wall. The other end of the side wall forms an opening, wherein the opening is sealed by the end cap. The side wall and the wall portion are integrally molded, and the casing has better resistance to vandalism. When the electrode terminal is subjected to external forces from external components, the connection position between the wall portion and the side wall is less likely to be damaged under the driving force of the electrode terminal.

In the second aspect, the embodiments of the present disclosure provide a battery, comprising any one of the battery cells provided in any embodiment of the first aspect.

In some embodiments, the battery comprises a busbar component and multiple battery cells. The multiple battery cells are electrically connected through the busbar component, and the busbar component abuts against the first surface and is welded and connected to the sealing component. This achieves a stable current flow between the electrode terminal and the busbar component.

In the second aspect, the embodiments of the present disclosure provide an electrical device, comprising the battery provided in any of the embodiments of the second aspect.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present disclosure;
FIG. 2 is an exploded view of a battery provided in some embodiments of the present disclosure;
FIG. 3 is an exploded view of the battery cell provided in some embodiments of the present disclosure;
FIG. 4 is a schematic diagram of the structure of the battery cell shown in FIG. 3;
FIG. 5 is a partial view of the battery cell shown in FIG. 4;
FIG. 6 is an assembly diagram of the sealing component and the electrode terminal as shown in FIG. 5;
FIG. 7 is a schematic diagram of the structure of the electrode terminal shown in FIG. 6;
FIG. 8 is a locally enlarged view at A in FIG. 6;
FIG. 9 is a locally enlarged view at A in FIG. 6 (without the welding portion);
FIG. 10 is a schematic diagram of the structure of the sealing component shown in FIG. 6;
FIG. 11 is an assembly diagram of the sealing component and the electrode terminal provided in some other embodiments of the present disclosure;
FIG. 12 is a schematic diagram of a structure of a battery cell provided in some other embodiments of the present disclosure;
FIG. 13 is an assembly diagram of the sealing component and the electrode terminal as shown in FIG. 12;
FIG. 14 is a schematic diagram of the structure of the electrode terminal shown in FIG. 13;
FIG. 15 is a partially enlarged view at B in FIG. 13; and
FIG. 16 is a partially enlarged view at B in FIG. 13 (without the welding portion).

Reference numerals: 1-casing; 11-shell; 111-wall portion; 112-side wall; 12-end cap; 2-electrode assembly; 21-first tab; 22-second tab; 3-electrode terminal; 31-stepped hole; 311-first hole segment; 3111-first bottom surface; 312-second hole segment; 3121-second bottom surface; 3122-hole side surface; 313-third hole segment; 32-first surface; 33-fourth surface; 34-dielectric injection hole; 35-main body portion; 36-first limiting portion; 37-second limiting portion; 4-current collector component; 5-sealing component; 51-main body region; 511-third surface; 52-edge region; 521-second surface; 522-first outer peripheral surface; 53-groove; 54-inclined surface; 55-abutting surface; 6-welding portion; 7-sealing member; 10-battery cell; 20-box; 201-first portion; 202-second portion; 100-battery; 200-controller; 300-motor; 1000-vehicle; Z-thickness direction.

### Detailed Description of Embodiments

In order to make the objective, technical solution, and advantages of the embodiments of the present disclosure clearer, the following will provide a clear and complete description of the technical solution in the embodiments of the present disclosure, in conjunction with the drawings in the embodiments of the present disclosure. Obviously, the described embodiments are only a part of the embodiments of the present disclosure, rather than all embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings. The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent or alternative of each other.

In the present disclosure, the term "and/or" is used as a way to describe the relationship between associated objects, indicating that there can be three possible relationships. For example, "A and/or B" can represent: the presence of A, the presence of both A and B, or the presence of B. Additionally, the character "/" in the present disclosure generally represents an "or" relationship between the preceding and following associated objects.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, as well as the overall dimensions such as thickness, length, and width of the integrated device, are provided as illustrative examples and should not be construed to limit the scope of the present disclosure.

In the present disclosure, the term "multiple (a plurality of)" refers to two or more (including two).

In the present disclosure, the battery cell can comprise various types of batteries such as lithium-ion secondary batteries, lithium-ion primary batteries, lithium-sulfur batteries, sodium-ion batteries, sodium-ion batteries, magnesium-ion batteries, etc. The embodiments of the present disclosure are not limited to any specific type of battery. The battery cell can have various shapes such as cylindrical, flat, rectangular, or other shapes. The embodiments of the embodiments of the present disclosure do not impose limitations on this aspect either. The battery cells are generally categorized into three packaging types: cylindrical battery cells, prismatic battery cells, and pouch battery cells. The embodiments of the embodiments of the present disclosure do not impose limitations in this regard either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. Batteries typically comprise a box that is configured to encapsulate one or multiple battery cells. The box helps to prevent liquids or other foreign substances from affecting the charging or discharging of the battery cells.

A battery cell comprises an electrode assembly and an electrolyte. The electrode assembly is composed of a positive electrode sheet, a negative electrode sheet, and a separator. The operation of the battery cell relies on the movement of metal ions between the positive electrode sheet and the negative electrode sheet. The positive electrode sheet comprises a positive current collector and a positive active material layer. The positive electrode active material layer is coated on a surface of the positive electrode current collector, and the positive electrode current collector not coated with the positive electrode active material layer protrudes from the positive electrode current collector coated with the positive electrode active material layer. The positive electrode current collector not coated with the positive electrode active material layer serves as the positive terminal tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide, and so on. The negative electrode sheet comprises a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer. The negative electrode current collector not coated with the negative electrode active material layer serves as the negative terminal tab. The material of the negative electrode current collector can be copper, and the negative active material can be carbon or silicon, and so on. To ensure that there is no fuse blow during high current flow, the number of positive terminal tabs is plurality and stacked together, and the number of negative terminal tabs is plurality and stacked together. The material of the separator can be PP (polypropylene), PE (polyethylene), and so on. Furthermore, the electrode assembly can be a wound structure or a stacked structure. The embodiments of the present disclosure are not limited herein.

The electrode terminal of a battery cell generally needs to be connected to external components to output electrical energy from the battery cell. For example, in the batteries, the multiple battery cells are generally electrically connected via a busbar component to enable series, parallel, or hybrid connection of the multiple battery cells. In realizing the electrical connection between the battery cells, the busbar component needs to be connected to the electrode terminal of the battery cell.

The inventors note that after an external component (e.g., a busbar component) is connected to the electrode terminal, the external component may become detached from the electrode terminal, and the electrical energy of the battery cell is not able to be output properly.

To achieve stable current flow between the electrode terminal and the internal components (tabs or current collector components) of the battery cell, a hole portion can be arranged in the electrode terminal to thin the electrode terminal in the region where the hole portion is provided, thus facilitating the connection of the electrode terminal to internal components. For instance, the thinned region of the electrode terminal is welded to the internal components to enable stable current flow. After connecting the electrode terminal to the internal components, it is necessary to weld the sealing component onto the electrode terminal to seal the hole portion through the sealing component.

The inventors have observed that after welding the sealing component onto the electrode terminal, the welding portion produced by the welding may protrude from a surface of the electrode terminal configured for contact with external components, which leads to a reduced contact area after connecting external components to the terminal body. Therefore, external components can easily detach from the electrode terminal. The stability of the electrical connection between external components and the electrode terminal is poor.

Given this, the embodiments of the present disclosure provide a battery cell, wherein the electrode terminal is provided with a stepped hole. The electrode terminal is provided with a first surface that is farthest from the electrode assembly. The stepped hole comprises a first hole segment and a second hole segment that are continuously arranged. The first hole segment is arranged on the first surface, and the second hole segment is arranged on a side of the first hole segment that is closer to the electrode assembly. The sealing component is at least partially positioned within the second hole segment, and the sealing component is welded and connected to the electrode terminal, forming a welding portion at the welding location. The first hole segment is configured to accommodate at least a portion of the welding portion so that the welding portion does not protrude from the first surface.

In such a battery cell, the first hole segment of the stepped hole can accommodate the welding portion generated from welding the sealing component to the electrode terminal. This ensures that the welding portion does not protrude from the first surface of the electrode terminal. When abutting against the first surface, external components are less likely to be affected by the welding portion, which increases the contact area between external components and the first surface and improves the firmness of the connection between external components and the electrode terminal. This, in turn, achieves a stable electrical connection between external components and the electrode terminal.

The battery cells described in the embodiments of the present disclosure are applicable to batteries and electrical devices that utilize the batteries.

The electrical devices can include vehicles, mobile phones, portable devices, laptops, ships, spacecraft, electric toys, electric tools, and more. Vehicles can be gasoline cars, gas cars, or new energy vehicles. New energy vehicles can include pure electric vehicles, hybrid vehicles, or extended-range vehicles. Aerospace vehicles comprise airplanes, rockets, spaceplanes, and spacecraft, among others. Electric toys include stationary or mobile electric toys, for example, video game consoles, electric car toys, electric boat toys, and electric airplane toys. Electric tools include metal cutting electric tools, grinding electric tools, assembly electric tools, and railway electric tools, for example, electric drills, electric sanders, electric wrenches, electric screwdrivers, electric hammers, impact drills, concrete vibrators, and electric planers, among others. The embodiments of the present disclosure do not impose any specific restrictions on the aforementioned electrical devices.

The following embodiments are explained using the example of vehicles as electrical devices for the sake of convenience.

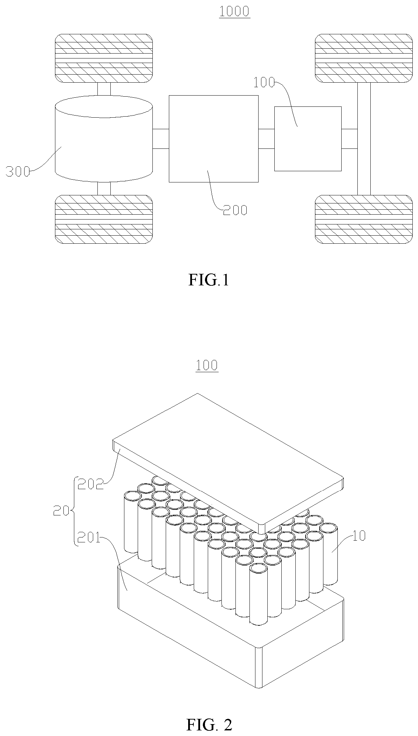

Referring to FIG. 1, FIG. 1 is a schematic diagram of a structure of a vehicle 1000 provided in some embodiments of the present disclosure. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000.

Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

**In** some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG.2, FIG. 2 is an exploded view of a battery 100 provided in some embodiments of the present disclosure; the battery 100 comprises a battery cell 10 and a box 20, wherein the box 20 is configured to contain the battery cell 10.

The box 20 is a component that contains the battery cell 10, and the box 20 provides a containment space for the battery cell 10. The box 20 can have various structures. **In** some embodiments, the box 20 can comprise a first portion 201 and a second portion 202, wherein the first portion 201 and the second portion 202 are capped with each other to define the containment space configured to accommodate the battery cell 10. The first portion 201 and the second portion 202 can be in various shapes, such as rectangular, cylindrical, and so on. The first portion 201 can be a hollow structure open on one side, and the second portion 202 can also be a hollow structure open on one side. The open side of the second portion 202 can be capped over the open side of the first portion 201, thereby forming a box 20 with a containment space. It is also possible for the first portion 201 to be a hollow structure open on one side, and the second portion 202 to be a plate-like structure. The second portion 202 can be capped over the open side of the first portion 201, thereby forming a box 20 with a containment space.

In the battery 100, the battery cell 10 can be one or multiple. If there are multiple battery cells 10, the multiple battery cells 10 can be connected in series, parallel, or hybrid. Hybrid connection refers to having both series and parallel connections among multiple battery cells 10. The multiple battery cells 10 can be first connected in series, parallel, or hybrid to form battery modules, and then the multiple battery modules can be connected in series, parallel, or hybrid to form a whole, which is accommodated in the box 20. Alternatively, all battery cells 10 can be directly connected in series, parallel, or hybrid, and the whole formed by all the battery cells 10 is then accommodated in the box 20.

In some embodiments, the battery 100 can also comprise a busbar component. The multiple battery cells 10 can be electrically connected through the busbar component to achieve series, parallel, or hybrid connection of the battery cells 10. The busbar component can be a metallic conductor, such as copper, iron, aluminum, stainless steel, aluminum alloy, etc.

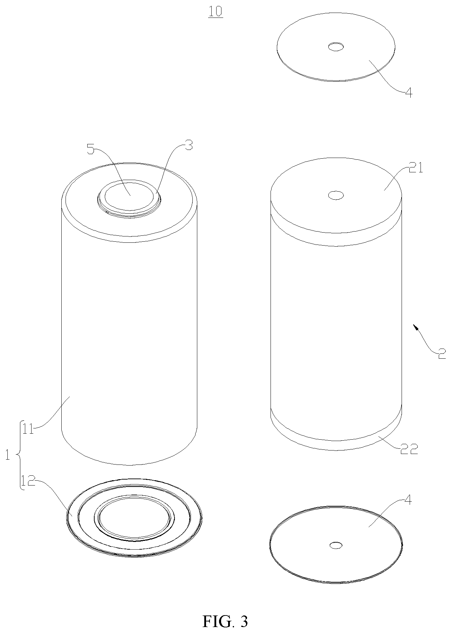

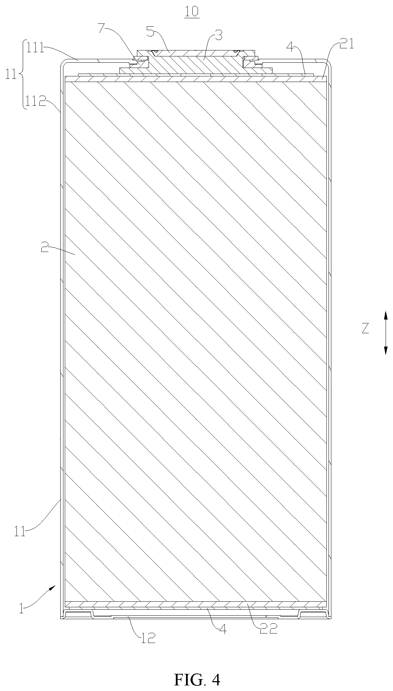

Referring to FIGS. 3 and 4, FIG. 3 is a schematic diagram of a structure of a battery cell 10 provided in some embodiments of the present disclosure; FIG. 4 is a schematic diagram of the structure of the battery cell 10 shown in FIG. 3. The battery cell 10 can comprise a casing 1, an electrode assembly 2, and an electrode terminal 3.

The casing 1 is configured to accommodate the electrode assembly 2, the electrolyte, and other components, and the casing 1 can comprise a shell 11 and an end cap 12. The end cap 12 seals the opening of the shell 11. The end cap 12, together with the shell 11, defines a sealed space configured to accommodate the electrode assembly 2, electrolyte, and other components.

The shell 11 is a component for accommodating the electrode assembly 2. The shell 11 can be a hollow structure with an opening formed at one end, or the shell 11 can be a hollow structure with openings formed at two opposite ends. The shell 11 can be in various shapes, such as cylinder, cuboid, and so on. The material of the shell 11 can be diverse, such as copper, iron, aluminum, steel, aluminum alloy, and so on.

The end cap 12 is a component that seals the opening of the shell 11, thereby isolating the internal environment of the battery cell 10 from the external environment. The shape of the end cap 12 can be adapted to the shape of the shell 11, for example, if the shell 11 is a cuboid structure, the end cap 12 is a rectangular plate-like structure that fits with the shell 11. Similarly, in the embodiment shown in FIGS. 3 and 4, if the shell 11 is a cylindrical structure, the end cap 12 can be a circular plate-like structure that fits with the shell 11. The material of the end cap 12 can also be diverse, including copper, iron, aluminum, steel, aluminum alloy, and more. The material of the end cap 12 can be the same as or different from the material of the shell 11.

In the casing 1, the end cap 12 can be provided with one or two. For example, the shell 11 is a hollow structure with openings formed at opposite ends, and two end caps 12 can be provided correspondingly, wherein the two end caps 12 seal the two openings of the shell 11 respectively. Further, in the embodiment described in FIGS. 3 and 4, the shell 11 is a hollow structure with an opening at one end, and one end cap 12 can be provided correspondingly, wherein one end cap 12 seals one of the openings in the shell 11.

The electrode assembly 2 is the component within the battery cell 10 where electrochemical reactions occur. The electrode assembly 2 can comprise a positive electrode sheet, a negative electrode sheet, and a separator. The electrode assembly 2 can be in the form of a wound structure formed by winding a positive electrode sheet, a separator, and a negative electrode sheet together. It can also be in the form of a stacked structure formed by layering a positive electrode sheet, a separator, and a negative electrode sheet. The electrode assembly 2 is provided with a first tab 21 and a second tab 22, wherein one of the first tabs 21 and the second tab 22 serves as a positive terminal tab and the other serves as a negative terminal tab. The positive terminal tab can be a portion of the positive electrode sheet that is not coated with the positive electrode active material layer, and the negative terminal tab can be a portion of the negative electrode sheet that is not coated with the negative electrode active material layer.

The electrode terminal 3 is a component in the battery cell 10 configured for connecting with external components (such as the busbar component) to output the electrical energy of the battery cell 10. The electrode terminal 3 can be arranged on the shell 11 or the end cap 12.

As shown in FIGS. 3 and 4, taking the shell 11 of hollow structure with an opening at one end as an example, the electrode terminal 3 can be arranged on a wall of the shell 11 opposite the end cap 12, where the electrode terminal 3 is electrically connected to the first tab 21 of the electrode assembly 2. The end cap 12 is electrically connected to the second tab 22 of the electrode assembly 2.

Of course, the electrode terminal 3 and the first tab 21 can be connected directly or indirectly, and the end cap 12 and the second tab 22 can be connected directly or indirectly. For example, the electrode terminal 3 is indirectly connected to the first tab 21 through a current collector component 4, and the end cap 12 is indirectly connected to the second tab 22 through another current collector component 4. Both the electrode terminal 3 and the first tab 21 can be welded to one current collector component 4, and both the end cap 12 and the second tab 22 can be welded to another current collector component 4. The current collector component 4 is a metallic conductor, such as copper, iron, aluminum, steel, aluminum alloy, etc. The current collector component 4 can be disk-shaped.

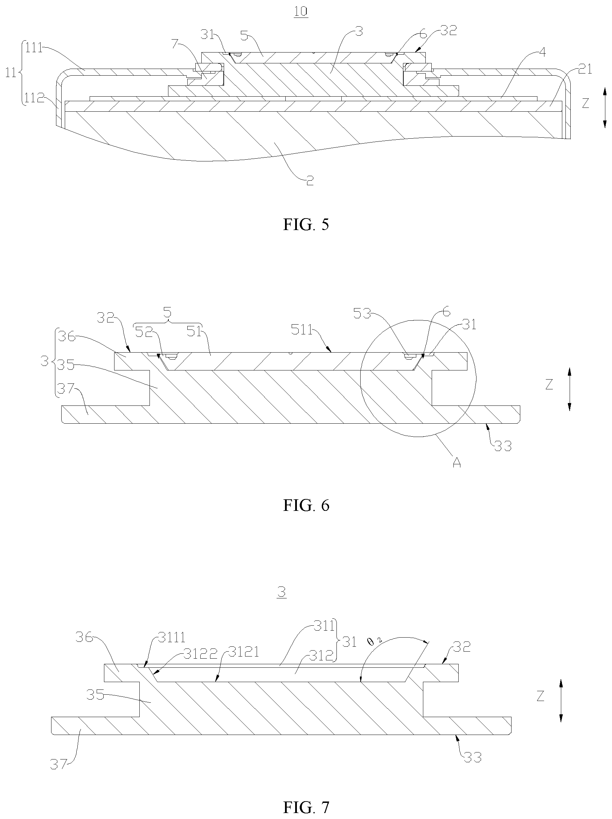

Referring to FIGS. 5 to 7, FIG. 5 is a partial view of the battery cell 10 shown in FIG. 4; FIG. 6 is an assembly diagram of the sealing component 5 and the electrode terminal 3 as shown in FIG. 5; and FIG. 7 is a schematic diagram of the structure of the electrode terminal 3 shown in FIG. 6. The embodiments of the present disclosure provide a battery cell 10, comprising a casing 1, an electrode assembly 2, an electrode terminal 3, and a sealing component 5. The casing 1 is provided with a wall portion 111, and the electrode assembly 2 is accommodated inside the shell 1. The electrode terminal 3 is provided in the wall portion 111, and the electrode terminal 3 is electrically connected to the electrode assembly 2. The electrode terminal 3 is provided with a stepped hole 31. Along the thickness direction Z of the wall portion 111, the electrode terminal 3 is provided with a first surface 32 that is farthest from the electrode assembly 2. The stepped hole 31 comprises a first hole segment 311 and a second hole segment 312 that are continuously arranged. The first hole segment 311 is arranged on the first surface 32, and the second hole segment 312 is arranged on a side of the first hole segment 311 that is closer to the electrode assembly 2. The sealing component 5 is at least partially positioned within the second hole segment 312, and the sealing component 5 is welded and connected to the electrode terminal 3, forming a welding portion 6 at the welding location. The first hole segment 311 is configured to accommodate at least a portion of the welding portion 6 so that the welding portion 6 does not protrude from the first surface 32.

The wall portion 111 can be an end cap 12 in the casing 1; the wall portion 111 can also be a wall in the shell 11 of the casing 1, e.g., in FIG. 5, the wall portion 111 is a wall of the shell 11 that is opposite to the end cap 12. Taking the casing 1 as a cylindrical example, the thickness direction Z of the wall portion 111 can be the axial direction of the casing 1. The electrode terminal 3 is arranged on the wall portion 111, and a through-hole is provided on the wall portion 111 for the electrode terminal 3 to pass through. To enhance the sealing between the electrode terminal 3 and the wall portion 111, a sealing member 7 can be arranged between the electrode terminal 3 and the wall portion 111.

The first surface 32 is the outer surface of the electrode terminal 3 facing away from the electrode assembly 2. The first surface 32 is also the outer surface of the electrode terminal 3 furthest away from the electrode assembly 2. The first surface 32 is located outside the casing 1. The first surface 32 can be a flat plane. The first hole segment 311 is the hole segment of the stepped hole 31 that is closest to the first surface 32, and an end of the first hole segment 311 which is away from the second hole segment 312 extends to the first surface 32. The second hole segment 312 is further away from the first surface 32 than the first hole segment 311 along the thickness direction Z. The first hole segment 311 and the second hole segment 312 can be cylindrical hole segments, conical hole segments, square hole segments, and the like.

Both the first hole segment 311 and the second hole segment 312 are provided with bottom surfaces. The bottom surface of the first hole segment 311 is the first bottom surface 3111, and the bottom surface of the second hole segment 312 is the second bottom surface 3121. In the thickness direction Z, an end of the second hole segment 312 away from the electrode assembly 2 extends to the first bottom surface 3111, and the first bottom surface 3111 is closer to the first surface 32 than the second bottom surface 3121. The first bottom surface 3111 and the second bottom surface 3121 can be planar, and the first bottom surface 3111, and the second bottom surface 3121 can be provided in parallel.

The sealing component 5 is a component to seal the stepped hole 31. The sealing component 5 can be partially arranged within the second hole segment 312 or can be entirely arranged within the second hole segment 312. The sealing component 5 can be a circular plate, a square plate, and so on. The material of the sealing component 5 can be the same as the material of the end cap 12. The sealing component 5 can be made of materials such as copper, iron, aluminum, steel, aluminum alloy, and so on.

The welding portion 6 is the portion that connects the sealing component 5 and the electrode terminal 3 together after the sealing component 5 is welded to the electrode terminal 3. A welding mark region formed by welding the sealing component 5 to the electrode terminal 3 is the welding portion 6, and the welding mark region can be of a different color than the other regions.

The first hole segment 311 serves to accommodate the welding portion 6. The first hole segment 311 can accommodate a portion of the welding portion 6, and the first hole segment 311 can also accommodate all of the welding portion 6. For example, if a portion of the welding portion 6 protrudes from the first bottom surface 3111, the first hole segment 311 accommodates that portion of the welding portion 6 protruding from the first bottom surface 3111. The welding portion 6 does not protrude from the first surface 32. In other words, in the thickness direction Z, there is no portion of the welding portion 6 that is farther away from the electrode assembly 2 compared to the first surface 32.

In embodiments of the present disclosure, the first hole segment 311 of the stepped hole 31 can accommodate the welding portion 6 generated from welding the sealing component 5 to the electrode terminal 3. This ensures that the welding portion 6 does not protrude from the first surface 32 of the electrode terminal 3. When abutting against the first surface 32, external components are less likely to be affected by the welding portion 6, which increases the contact area between external components and the first surface 32. This results in an improvement in the firmness of the connection between external components and the electrode terminal 3, and thus a stable electrical connection between external components and the electrode terminal 3 can be achieved, ensuring a stable current flow between the electrode terminal 3 and external components. The electrode terminal 3 of the battery cell 10 with such a structure has the ability to achieve a stable electrical connection with external components.

In the embodiments of the present disclosure, external components can take various structural forms of conductive elements, such as a busbar component configured to establish electrical connections among multiple battery cells 10.

Taking the example of welding the busbar component to the electrode terminal 3, because the welding portion 6 does not protrude from the first surface 32, the busbar component can have a large-area contact with the first surface 32. The welding of the busbar component and electrode terminal 3 is less prone to void-welding, ensuring good firmness after welding. This enhances the stability of current flow between the busbar component and electrode terminal 3, achieving a reliable electrical connection between the busbar component and electrode terminal 3.

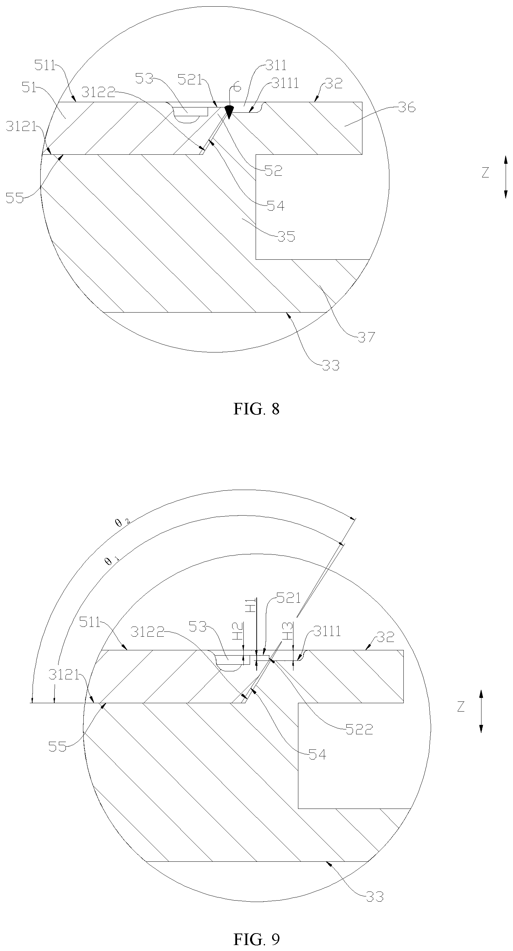

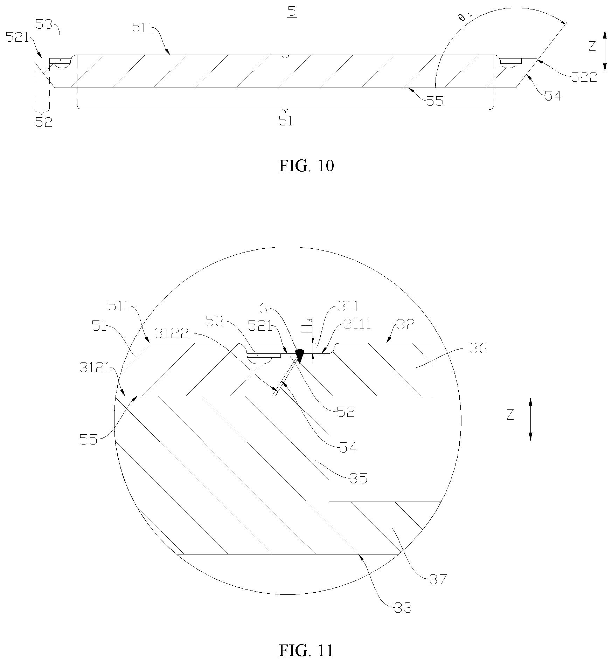

In some embodiment, referring to FIGS. 8 to 10, FIG. 8 is a locally enlarged view at A in FIG. 6; FIG. 9 is a locally enlarged view at A in FIG. 6 (without the welding portion 6); and FIG. 10 is a schematic diagram of the structure of the sealing component 5 shown in FIG. 6. The sealing component 5 comprises a main body region 51 and an edge region 52. The edge region 52 is arranged around the main body region 51. The welding portion 6 is connected to the edge region 52, protruding at least partially from a bottom surface (first bottom surface 3111) of the first hole segment 311.

The central portion of the sealing component 5 is the main body region 51, and the outer portion of the sealing component 5 is the edge region 52. The edge region 52 surrounds the main body region 51. The edge region 52 can be integrally molded with the main body region 51. Taking the example that the sealing component 5 is a circular plate, the main body region 51 can be a circular region located at the center of the sealing component 5, and the edge region 52 can be an annular region surrounding the main body region 51. The weld portion 6 can partially protrude from the first bottom surface 3111 or can fully protrude from the first bottom surface 3111, and the welding portion 6 connects the edge region 52 and the first bottom surface 3111.

The sealing component 5 is secured to the electrode terminal 3 by welding the welding portion 6 to both the edge region 52 and the first bottom surface 3111. During welding, the welding can be performed along the edge of the edge region 52, thus enhancing welding efficiency.

In some embodiment, referring to FIG. 11, FIG. 11 is an assembly diagram of the sealing component 5 and the electrode terminal 3 provided in some other embodiments of the present disclosure. Along the thickness direction Z, the edge region 52 is provided with a second surface 521 that is facing away and farthest away from the electrode assembly 2, wherein the second surface 521 is aligned with the bottom surface (first bottom surface 3111) of the first hole segment 311.

The second surface 521 is the outer surface of the edge region 52, which is backed from the electrode assembly 2. The second surface 521 is also the outer surface of the edge region 52 that is farthest away from the electrode assembly 2. The second surface 521 can be a flat surface. The second surface 521 is located in the same plane as the bottom surface (first bottom surface 3111) of the first hole segment 311.

When welding the edge region 52 to the electrode terminal 3, the welding can be performed along the welding seam between the second surface 521 and the bottom surface (first bottom surface 3111) of the first hole segment 311, thus ensuring that the welding portion 6 is at least partially formed along the welding seam.

In the embodiment, the second surface 521 is aligned with the bottom surface (first bottom surface 3111) of the first hole segment 311. It is ensured that there is no portion of the edge region 52 protruding from the bottom surface (first bottom surface 3111) of the first hole segment 311. The second surface 521 is further away from the first surface 32, allowing the welding portion 6 to be further away from the first surface 32 and further reducing the risk of the welding portion 6 protruding from the first surface 32.

In some embodiments, referring again to FIGS. 8 and 9, along the thickness direction Z, the edge region 52 is provided with a second surface 521 that is facing away and farthest away from the electrode assembly 2, wherein the second surface 521 is located between the first surface 32 and the bottom surface (first bottom surface 3111) of the first hole segment 311.

Understandably, along the thickness direction Z, the first surface 32 is farther from the electrode assembly 2 than the second surface 521, and the second surface 521 is farther from the bottom surface of the first hole segment 311 than the electrode assembly 2.

In the embodiment, the second surface 521 is located between the first surface 32 and the bottom surface (first bottom surface 3111) of the first hole segment 311. A portion of the edge region 52 protrudes from the bottom surface (first bottom surface 3111) of the first hole segment 311, which is advantageous during welding as it facilitates the recognition of the outer contour of the edge region 52 by welding equipment. This enhances welding efficiency and quality.

In some embodiments, referring again to FIGS. 8 and 9, the edge region 52 is provided with a first outer peripheral surface 522 connected to the second surface 521, and the welding portion 6 is connected to the first outer peripheral surface 522 and the bottom surface (first bottom surface 3111) of the first hole segment 311.

The first outer peripheral surface 522 can extend along the thickness direction Z. Taking the example that the first outer peripheral surface 522 is a cylindrical surface, the axial direction of the first outer peripheral surface 522 is aligned with the thickness direction Z. The welding portion 6 can partially protrude from the first outer peripheral surface 522 or completely protrude from the first outer peripheral surface 522 to achieve a connection of the welding portion 6 to the first outer peripheral surface 522. The weld portion 6 can partially protrude from the bottom surface (first bottom surface 3111) of the first hole segment 311 or can fully protrude from the bottom surface (first bottom surface 3111) of the first hole segment 311 to achieve a connection of the welding portion 6 to the bottom surface (first bottom surface 3111) of the first hole segment 311.

During welding, the welding equipment can determine the welding position by recognizing the first outer peripheral surface 522 of the edge region 52, thus improving welding efficiency and quality. Due to the connection of the welding portion 6 to the first outer peripheral surface 522 and the bottom surface (first bottom surface 3111) of the first hole segment 311, it is possible to improve the firmness of the edge region 52 after it is connected to the welding portion 6 and the electrode terminal 3.

In some embodiments, referring again to FIGS. 8 and 9, along the thickness direction Z, a distance between the second surface 521 and the bottom surface (first bottom surface 3111) of the first hole segment 311 is denoted as H₁, satisfying: H₁≤0.1mm.

The distance H₁ between the second surface 521 and the bottom surface (first bottom surface 3111) of the first hole segment 311 is the height by which the edge region 52 protrudes from the bottom surface (first bottom surface 3111) of the first hole segment 311.

H₁ can be 0.01 mm, 0.02 mm, 0.03 mm, 0.04 mm, 0.05 mm, 0.06 mm, 0.07 mm, 0.08 mm, 0.09 mm, 0.1 mm, etc.

If H₁ > 0.1mm, the distance between the second surface 521 and the bottom surface (first bottom surface 3111) of the first hole segment 311 is too large, and the distance between the second surface 521 and the first surface 32 is too small. After welding the edge region 52 to the electrode terminal 3, there is a risk of the welding portion 6 protruding from the first surface 32.

In the embodiment, with H₁≤0.1mm, the second surface 521 is further away from the first surface 32, further reducing the risk of the welding portion 6 protruding from the first surface 32.

In some embodiments, referring again to FIGS. 8 and 9, a distance between the second surface 521 and the first surface 32 is denoted as H₂, satisfying: H₂≥0.1mm.

H₂ can be 0.1mm, 0.2mm, 0.3mm, 0.4mm, 0.5mm, 0.6mm, 0.7mm, 0.8mm, 0.9mm, 1mm, etc.

If H₂ < 0.1, the distance between the second surface 521 and the first surface 32 is smaller. After welding the edge region 52 to the electrode terminal 3, there is a risk of the welding portion 6 protruding from the first surface 32.

In the embodiment, with H₂≥0.1mm, the second surface 521 is further away from the first surface 32, further reducing the risk of the welding portion 6 protruding from the first surface 32.

In some embodiments, referring to FIG. 8, FIG. 9, and FIG. 11, along the thickness direction Z, the main body region 51 is provided with a third surface 511 that is backed from the electrode assembly 2, and the third surface 511 is a surface of the sealing component 5 farthest away from the electrode assembly 2. The third surface 511 is aligned with the first surface 32.

The third surface 511 is the outer surface of the main body region 51 facing away from the electrode assembly 2. The third surface 511 is also the outer surface of the sealing component 5 furthest from the electrode assembly 2. The third surface 511 can be flat, and the third surface 511, and the first surface 32 are located in the same plane. Along the thickness direction Z, the third surface 511 is farther away from the electrode assembly 2 than the second surface 521.

In the embodiment, the third surface 511 is aligned with the first surface 32. The sealing component 5 is disposed integrally in the stepped hole 31 and the main body region 51 does not protrude from the first surface 32, thus allowing for external components to contact the first surface 32 over a large area. Additionally, both the third surface 511 and the first surface 32 can come into contact with external components, effectively increasing the contact area for current flow between the battery cell 10 and external components.

In other embodiments, along the thickness direction Z, the main body region 51 is provided with a third surface 511 that is backed from the electrode assembly 2, and the third surface 511 is a surface of the sealing component 5 farthest from the electrode assembly 2. The third surface 511 is closer to the electrode assembly 2 than the first surface 32. In this way, the sealing component 5 is entirely located within the stepped hole 31, and the main body region 51 does not protrude from the first surface 32. This reduces the risk of interference between external components and the main body region 51, thus allowing for external components to contact the first surface 32 over a large area.

In some embodiments, referring to FIG. 8, FIG. 9, and FIG. 11, the sealing component 5 is provided with a groove 53 that is recessed from the third surface 511 toward the direction closer to the electrode assembly 2. The groove 53 is provided around the main body region 51 and the edge region 52 is provided around the groove 53.

The groove 53 can be a circular groove arranged on the sealing component 5. Along the radial direction of the sealing component 5, the region of the sealing component 5 inside the groove 53 is the main body region 51, and the region outside the groove 53 is the edge region 52. The third surface 511 of the main body region 51 is connected to the second surface 521 of the edge region 52 through a groove wall of the groove 53. The groove 53 can be formed in various ways, such as stamping, milling, and so on.

The arrangement of the groove 53 can reduce the impact on the main body region 51 when the edge region 52 is welded to the electrode terminal 3. The groove 53 can release the welding stress generated during the welding of the edge region 52 to the electrode terminal 3, thus reducing the risk of deformation of the main body region 51 and ensuring the smoothness of the third surface 511.

In the embodiment where the third surface 511 is aligned with the first surface 32, the arrangement of the groove 53 ensures the smoothness of the third surface 511. When external components come into contact with the third surface 511 and are welded to the main body region 51, they are less prone to void-welding, ensuring the firmness of the welding between external components and the main body region 51.

In some embodiments, the welding portion 6 is a ring-shaped structure provided around the edge region 52.

When welding the edge region 52 to the electrode terminal 3, welding can be performed along the entire circumference of the edge region 52 to correspond to the formation of the welding portion 6 in the shape of a ring.

**In** the embodiment, the welding portion 6 is a ring-shaped structure. This enhances the firmness of the edge region 52 and the electrode terminal 3 after welding and enables a seal between the edge region 52 and the electrode terminal 3.

**In** some embodiments, referring to FIG. 8, FIG. 9, and FIG. 11, along the thickness direction Z, the sealing component 5 is provided with a third surface 511 that is facing away and farthest away from the electrode assembly 2. The third surface 511 is aligned with the first surface 32.

**In** the embodiment where the sealing component 5 is provided with a main body region 51 and an edge region 52, the third surface 511 can be the surface of the main body region 51 that is backed from the electrode assembly 2 along the thickness direction Z.

**In** the embodiment, the third surface 511 is aligned with the first surface 32. The sealing component 5 is disposed integrally in the stepped hole 31 and the main body region 51 does not protrude from the first surface 32, thus allowing for external components to contact the first surface 32 over a large area. Additionally, both the third surface 511 and the first surface 32 can come into contact with external components, effectively increasing the contact area for current flow between the battery cell 10 and external components.

**In** other embodiments, along the thickness direction Z, the sealing component 5 is provided with a third surface 511 that is facing away and farthest away from the electrode assembly 2. The third surface 511 is closer to the electrode assembly 2 than the first surface 32. **In** this way, the sealing component 5 is entirely located within the stepped hole 31, and the main body region 51 does not protrude from the first surface 32. This reduces the risk of interference between external components and the sealing component 5, thus allowing for external components to contact the first surface 32 over a large area.

**In** some embodiment, referring to FIGS. 8, 9, and 11, along the thickness direction Z, a distance between the bottom surface (first bottom surface 3111) of the first hole segment 311 and the first surface 32 is denoted as H₃, satisfying: H₃≥0.1mm.

The distance between the bottom surface (first bottom surface 3111) of the first hole segment 311 and the first surface 32 is H₃, which is the depth of the first hole segment 311. H₃ can be 0.1mm, 0.2mm, 0.3mm, 0.4mm, 0.5mm, 0.6mm, 0.7mm, 0.8mm, 0.9mm, 1mm, etc. Exemplary, H₃≥0.2mm.

If H₃ < 0.1mm, the depth of the first hole segment 311 is relatively shallow, which causes a risk of the welding portion 6 protruding from the first surface 32.

The inventors have observed that when welding the sealing component 5 to the electrode terminal 3, the height of the portion of the welding portion 6 protruding from the bottom surface (first bottom surface 3111) of the first hole segment 311 generally does not exceed 0.1mm. If H₃≥0.1mm, the depth of the first hole segment 311 becomes deeper, further reducing the risk of the welding portion 6 protruding from the first surface 32.

**In** some embodiments, referring to FIGS. 8, 9, and 11, a hole side surface 3122 of the second hole segment 312 is inclined, and the hole side surface 3122 of the second hole segment 312 is provided at an obtuse angle to a bottom surface (second bottom surface 3121) of the second hole segment 312.

The hole side surface 3122 of the second hole segment 312 is connected to the bottom surface (second bottom surface 3121) of the second hole segment 312 and the bottom surface (first bottom surface 3111) of the first hole segment 311. The hole side surface 3122 of the second hole segment 312 can be a conical surface; the hole side surface 3122 of the second hole segment 312 can also be a prismatic surface, for example, the hole side surface 3122 of the second hole segment 312 is a quadrangular cone.

In the embodiment, the hole side surface 3122 of the second hole segment 312 is provided at an obtuse angle to a bottom surface (second bottom surface 3121) of the second hole segment 312. This reduces the difficulty of accessing the sealing component 5 into the second hole segment 312 and facilitates providing the sealing component 5 into the second hole segment 312, thus improving the efficient arrangement of the sealing component 5.

In some embodiments, referring to FIG. 9, the hole side surface 3122 of the second hole segment 312 is connected to the bottom surface (first bottom surface 3111) of the first hole segment 311 and forms a sharp angle at the connection position.

The connection position between the hole side surface 3122 of the second hole segment 312 and the bottom surface (first bottom surface 3111) of the first hole segment 311 forms a sharp angle. It is understood that the hole side surface 3122 of the second hole segment 312 and the bottom surface (first bottom surface 3111) of the first hole segment 311 do not transition through a rounded corner. The welding portion 6 is located at the connection position between the hole side surface 3122 and the bottom surface (first bottom surface 3111) of the first hole segment 311.

The sharp angle at the connection position between the hole side surface 3122 of the second hole segment 312 and the bottom surface (first bottom surface 3111) of the first hole segment 311 facilitates recognition by welding equipment. When welding the sealing component 5 to the electrode terminal 3, the sharp angle can serve as a capture position for the welding equipment. The welding equipment can determine the welding position based on the pointed angle, thereby improving welding efficiency and welding quality.

In some embodiments, the hole side surface 312 of the second hole segment 3122 is a conical surface. Understandably, the second hole segment 312 is a conical hole segment. The conical second hole segment 312 has a simple structure and is easy to process.

In some embodiments, referring to FIGS. 8, 9, and 11, an outer peripheral surface of the sealing component 5 comprises an inclined surface 54, and the inclined surface 54 is arranged by facing towards the hole side surface 3122 of the second hole segment 312.

The inclined surface 54 can be provided in parallel to the hole side surface 3122 of the second hole segment 312, or it can be provided at a small angle, such as an angle of 3°, 5°, 8°, or 10°, etc. It should be noted that the angle between the inclined surface 54 and the hole side surface 3122 of the second hole segment 312 does not exceed 10°. It should all be understood that the inclined surface 54 is arranged by facing the hole side surface 3122 of the second hole segment 312.

In the embodiment where the edge region 52 of the sealing component 5 is provided with a first outer peripheral surface 522, the first outer peripheral surface 522 is connected to the inclined surface 54. Both the first outer peripheral surface 522 and the inclined surface 54 are part of the outer peripheral surface of the sealing component 5.

In the embodiment, the inclined surface 54 is arranged by facing the hole side surface 3122 of the second hole segment 312. This structure allows more parts of the sealing component 5 to be accommodated within the second hole segment 312.

In some embodiments, along the thickness direction Z, the sealing component 5 is provided with an abutting surface 55, wherein the abutting surface 55 abuts against the bottom surface (second bottom surface 3121) of the second hole segment 312. The angle between the abutting surface 55 and the inclined surface 54 is denoted as θ₁, and the angle between the hole side surface 3122 of the second hole segment 312 and the bottom surface (second bottom surface 3121) of the second hole segment 312 is denoted as θ₂, satisfying θ₁ > θ₂.

The abutment surface 55 is the surface of the abutment component configured to contact the bottom surface (second bottom surface 3121) of the second hole segment 312. The abutting surface 55 can be a surface of the abutment component closest to the electrode assembly 2 along the thickness direction Z. The abutment surface 55 can be a plane connected to the inclined surface 54.

If 90° < θ₁ < 180°, θ₁ can be 100°, 110°, 120°, 130°, 135°, 140°, 150°, 160°, 170°, etc.; if 90° < θ₂ < 180°, θ₂ can be 100°, 110°, 120°, 130°, 135°, 140°, 150°, 160°, 170°, etc., and θ₁ can be larger than θ₂ by 1°, 2°, 3°, 4°, 5°, 6°, 7°, 8°, 9°, 10°, etc.

In the embodiment, with θ₁ > θ₂, the gap between the hole side surface 3122 of the second hole segment 312 and the inclined surface 54 of the sealing component 5 gradually increases along the depth direction of the second hole segment 312. This allows the sealing component 5 to abut against the bottom surface (second bottom surface 3121) of the second hole segment 312, ensuring the proper arrangement of the sealing component 5.

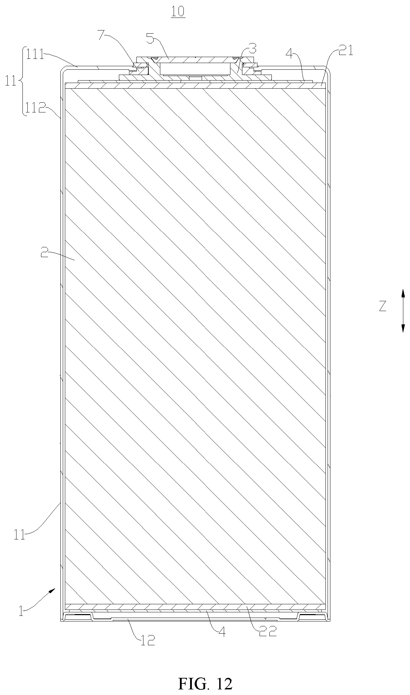

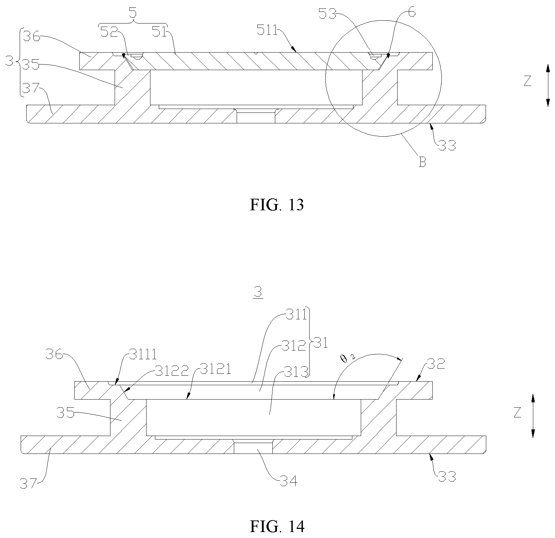

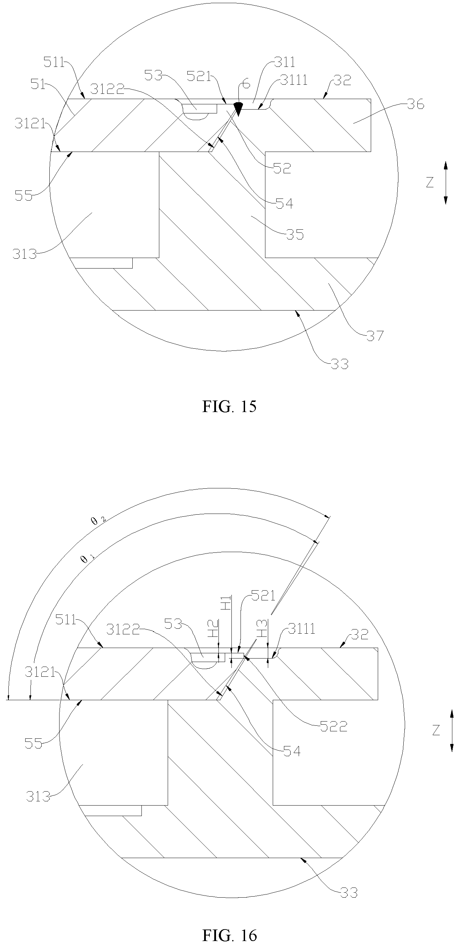

In some embodiment, referring to FIGS. 12 to 16, FIG. 12 is a schematic diagram of a structure of a battery cell 10 provided in some other embodiments of the present disclosure; FIG. 13 is an assembly diagram of the sealing component 5 and the electrode terminal 3 as shown in FIG. 12; FIG. 14 is a schematic diagram of the structure of the electrode terminal 3 shown in FIG. 13; FIG. 15 is a partially enlarged view at B in FIG. 13; and FIG. 16 is a partially enlarged view at B in FIG. 13 (without the welding portion 6). The stepped hole 31 further comprises a third hole segment 313, and the third hole segment 313 is arranged on the bottom surface (second bottom surface 3121) of the second hole segment 312. The sealing component 5 abuts against the bottom surface (second bottom surface 3121) of the second hole segment 312.

In the thickness direction Z, an end of the third hole segment 313 away from the electrode assembly 2 extends to the bottom surface (second bottom surface 3121) of the second hole segment 312. The third hole segment 313 can be cylindrical hole segments, conical hole segments, square hole segments, and the like. Exemplary, the minimum diameter of the first hole segment 311 is greater than the maximum diameter of the second hole segment 312, and the minimum diameter of the second hole segment 312 is greater than the maximum diameter of the third hole segment 313. In the embodiment shown in FIG. 14, both the first hole segment 311 and the second hole segment 312 are conical hole segments, and the third hole segment 313 is a cylindrical hole segment.

The stepped hole 31 can be initially formed by shaping the first hole segment 311 on the first surface 32, followed by the formation of the second hole segment 312 on the bottom surface (first bottom surface 3111) of the first hole segment 311, and subsequently, the third hole segment 313 is shaped on the bottom surface (second bottom surface 3121) of the second hole segment 312.

The abutting surface 55 of the sealing component 5 abuts against the bottom surface (second bottom surface 3121) of the second hole segment 312, and the sealing component 5 covers the third hole segment 313.

The arrangement of the third hole segment 313 can reduce the thickness of the electrode terminal 3 in the region configured for connecting to internal components of the battery cell 10. This facilitates the welding of the connection region and the internal components, enhancing the strength of the weld between them. Exemplary, in FIG. 12, the internal component is a current collector component 4 that connects the electrode terminal 3 and the first tab 21.

In some embodiments, referring again to FIG. 14, along the thickness direction Z, the electrode terminal 3 is provided with a fourth surface 33 facing and closest to the electrode assembly 2. The electrode terminal 3 is provided with a dielectric injection hole 34, with one end of the dielectric injection hole 34 extending to the fourth surface 33, and the other end of the dielectric injection hole 34 communicating with the stepped hole 31. The dielectric injection hole 34 is configured to inject electrolyte into the interior of the battery cell 10.

The fourth surface 33 is the inner surface of the electrode terminal 3 facing the electrode assembly 2. The fourth surface 33 is also the inner surface of the electrode terminal 3 closest to the electrode assembly 2. The fourth inner surface is located inside the casing 1 and the fourth inner surface can be a flat surface. Along the thickness directionZ, the fourth surface 33 and the first surface 32 are the two end faces of the electrode terminal 3, respectively. The fourth surface 33 can abut against an internal component located inside the battery cell 10. Taking the example of the electrode terminal 3 being connected to the first tab 21 through the current collector component 4, the fourth surface 33 can abut against the current collector component 4.

The dielectric injection hole 34 can be a cylindrical hole, conical hole, square hole, etc. The dielectric injection hole 34 is configured to communicate the stepped hole 31 and the interior of the battery cell 10. In embodiments where the stepped hole 31 comprises only the first hole segment 311 and the second hole segment 312, the dielectric injection hole 34 is in communication with the second hole segment 312. As shown in FIG. 14, in embodiments where the stepped hole 31 comprises the first hole segment 311, the second hole segment 312, and the third hole segment 313, the dielectric injection hole 34 can be in communication with the third hole segment 313. Certainly, the dielectric injection hole 34 communicates directly with the third hole segment 313 or can communicate indirectly through other hole segments.

In the embodiment, the dielectric injection hole 34 facilitates the convenient injection of electrolyte into the interior of the battery cell 10. After injecting electrolyte into the interior of the battery cell 10, the dielectric injection hole 34 can be sealed by the sealing component 5, thus reducing the risk of electrolyte flowing out of the battery cell 10 through the dielectric injection hole 34.

It should be noted that the sealing component 5 can extend into the dielectric injection hole 34 and form a seal to block the dielectric injection hole 34. The sealing component 5 can also not extend into the dielectric injection hole 34. If the sealing component 5 forms a seal with any hole segment in the stepped hole 31, the sealing of the dielectric injection hole 34 can be realized. For example, the sealing component 5 partially extends into the second hole segment 312. After the sealing component 5 is welded to the electrode terminal 3, it forms a sealed connection, thus realizing the sealing of the dielectric injection hole 34 by sealing component 5.

In some embodiments, the electrode terminal 3 comprises a main body portion 35, a first limiting portion 36, and a second limiting portion 37. Along the thickness direction Z, the first limiting portion 36 and the second limiting portion 37 are connected to both ends of the main body portion 35, respectively. The main body portion 35 passes through the wall portion 111, and the wall portion 111 is at least partially located between the first limiting portion 36 and the second limiting portion 37 to restrict the movement of the electrode terminal 3 relative to the wall portion 111. The first surface 32 is a surface of the first limiting portion 36 facing away from the second limiting portion 37.

The main body portion 35, the first limiting portion 36, and the second limiting portion 37 can be an integrally molded structure. The main body part passes through the through-hole on the wall portion 111, with the first limiting portion 36 located externally to the casing 1, and the second limiting portion 37 located internally to the shell 11. The main body portion 35, the first limiting portion 36, and the second limiting portion 37 form a riveting structure riveted to the wall portion 111. The main body portion 35, the first limiting portion 36, and the second limiting portion 37 can be coaxially arranged cylindrical structures. The diameter of the first limiting portion 36 and the diameter of the second limiting portion 37 are both greater than the diameter of the main body portion 35.

The first limiting portion 36 is configured for connection with external components, and the second limiting portion 37 is configured for electrical connection to the electrode assembly 2. As an example, the electrode terminal 3 is connected to the first tab 21 through the current collector component 4 and the stepped hole 31 is provided with a third hole segment 313. The second limiting portion 37 abuts against the current collector component 4. The region at the bottom of the third hole segment 313 where the electrode terminal 3 is located can be configured for welding to the current collector component 4.

In the embodiment, the main body portion 35 passes through the wall portion 111, and the wall portion 111 is at least partially located between the first limiting portion 36 and the second limiting portion 37. Therefore, radial and axial constraints on the electrode terminal 3 can be achieved, thus securing the electrode terminal 3 to the wall portion 111.

In some embodiments, referring again to FIG. 12, the casing 1 comprises a shell 11 and an end cap 12. The shell 11 comprises a side wall 112 and a wall portion 111 that are integrally molded. The side wall 112 surrounds the wall portion 111, and along the thickness direction Z, the wall portion 111 is arranged at one end of the side wall 112. The other end of the side wall 112 forms an opening, wherein the opening is sealed by the end cap 12.

The end cap 12 and the shell 11 can be connected in various ways, such as welding or winding connections. The shell 11 can be formed into an integral side wall 112 and wall portion 111 through methods such as stamping and stretching. Exemplary, the shell 11 is a cylindrical structure, and the end cap 12 is a circular structure.

The side wall 112 and the wall portion 111 are integrally molded, and the casing 1 has better resistance to vandalism. When the electrode terminal 3 is subjected to external forces from external components, the connection position between the wall portion 111 and side wall 112 is less likely to be damaged under the driving force of the electrode terminal 3.

The embodiments of the present disclosure provide a battery 100, comprising any of the battery cells 10 provided in the above embodiments.

In some embodiments, the battery 100 comprises a busbar component and multiple battery cells 10. The multiple battery cells 10 are electrically connected through the busbar component, and the busbar component abuts against the first surface 32 and is welded and connected to the sealing component 5. This achieves a stable current flow between the electrode terminal 3 and the busbar component.

In other embodiments, the busbar component can also abut against the first surface 32 and be welded and connected to the electrode terminal 3.

The embodiments of the present disclosure provide an electrical device, comprising any of the batteries 100 provided in the above embodiments.

Additionally, referring again to FIGS. 12 to 16, the embodiments of the present disclosure provided a cylindrical battery cell, comprising a casing 1, an electrode assembly 2, electrode terminals 3, a current collector component 4, a sealing component 5, and a sealing member 7. The casing 1 comprises a shell 11 and an end cap 12. The shell 11 comprises a side wall 112 and a wall portion 111 that are integrally molded. The side wall 112 surrounds the wall portion 111, and along the thickness direction Z of the wall portion 111, the wall portion 111 is arranged at one end of the side wall 112. The other end of the side wall 112 forms an opening, wherein the opening is sealed by the end cap 12. The electrode terminal 3 is riveted to the wall portion 111. The sealing member 7 is arranged between the electrode terminal 3 and the wall portion 111. The sealing member 7 is configured to achieve a sealed connection between the electrode terminal 3 and the wall portion 111. The electrode assembly 2 is accommodated within the casing 1. The electrode assembly 2 is provided with a first tab 21 and a second tab 22. The first tab 21 is connected to the electrode terminal 3 through a current collector component 4, with both the first tab 21 and the electrode terminal 3 welded to the current collector component 4. The second tab 22 is connected to the end cap 12 through another current collector component 4.

The electrode terminal 3 is provided with a stepped hole 31, wherein along a thickness direction Z of the wall portion 111, the electrode terminal 3 is provided with a first surface 32 that is backed and furthest away from the electrode assembly 2. The stepped hole 31 comprises a first hole segment 311, a second hole segment 312, and a third hole segment 313, which are continuously arranged. The sealing component 5 is at least partially located within the second hole segment 312. The sealing component 5 comprises a main body region 51 and an edge region 52. The edge region 52 is provided around the main body region 51. The edge region 52 is welded and connected to the electrode terminal 3, forming a welding portion 6 at the welding position. The welding portion 6 is a ring-shaped structure arranged around the edge region 52. The welding portion 6 connects the edge region 52 and at least protrudes from the bottom surface (first bottom surface 3111) of the first hole segment 311. The first hole segment 311 is configured to accommodate at least a portion of the welding portion 6 so that the welding portion 6 does not protrude from the first surface 32.

Along the thickness direction Z, the edge region 52 is provided with a second surface 521 that is facing away and farthest away from the electrode assembly 2, wherein the second surface 521 is located between the first surface 32 and the bottom surface (first bottom surface 3111) of the first hole segment 311. The edge region 52 is provided with a first outer peripheral surface 522 connected to the second surface 521, and the welding portion 6 is connected to the first outer peripheral surface 522 and the bottom surface (first bottom surface 3111) of the first hole segment 311. Along the thickness direction Z, the distance between the second surface 521 and the bottom surface (first bottom surface 3111) of the first hole segment 311 is denoted as H₁. The distance between the second surface 521 and the first surface 32 is denoted as H₂. The distance between the bottom surface (first bottom surface 3111) of the first hole segment 311 and the first surface 32 is denoted as H₃, where H₁≤0.1mm, H₂≥0.1mm, and H₃≥0.1mm.

Along the thickness direction Z, the main body region 51 is provided with a third surface 511 that is backed from the electrode assembly 2, and the third surface 511 is a surface of the sealing component 5 farthest from the electrode assembly 2. The third surface 511 is aligned with the first surface 32. The sealing component 5 is provided with a groove 53 that is recessed from the third surface 511 toward the direction closer to the electrode assembly 2. The groove 53 is provided around the main body region 51 and the edge region 52 is provided around the groove 53.

The hole side surface 3122 of the second hole segment 312 is a conical surface. The hole side surface 3122 of the second hole segment 312 is provided at an obtuse angle to a bottom surface (second bottom surface 3121) of the second hole segment 312. The outer peripheral surface of the sealing component 5 comprises an abutting surface 55 connected with the first outer peripheral surface 522, wherein the abutting surface 55 abuts against the bottom surface (second bottom surface 3121) of the second hole segment 312. The angle between the abutting surface 55 and the inclined surface 54 is denoted as θ₁, and the angle between the hole side surface 3122 of the second hole segment 312 and the bottom surface (second bottom surface 3121) of the second hole segment 312 is denoted as θ₂, satisfying θ₁ > θ₂.

Along the thickness direction Z, the electrode terminal 3 is provided with a fourth surface 33 facing and closest to the electrode assembly 2. The electrode terminal 3 is provided with a dielectric injection hole 34, with one end of the dielectric injection hole 34 extending to the fourth surface 33, and the other end of the dielectric injection hole 34 communicating with the stepped hole 31. The dielectric injection hole 34 is configured to inject electrolyte into the interior of the battery cell 10.

It should be noted that, without conflict, the embodiments and features described in the present disclosure can be combined with each other.

The above embodiments are provided only to illustrate the technical solutions of the present disclosure and are not intended to limit the scope of the present disclosure. For those skilled in the art, various modifications and changes can be made to the present disclosure. Any modification, equivalent substitution, improvement, etc. made within the spirit and principles of the present disclosure shall be included in the scope of protection of the present disclosure.

## Claims

1. A battery cell, comprising
a casing, providing a wall portion;
an electrode assembly, accommodated within the casing;
an electrode terminal, provided in the wall portion, wherein the electrode terminal is electrically connected to the electrode assembly; the electrode terminal is provided with a stepped hole; along a thickness direction of the wall portion, the electrode terminal is provided with a first surface that is facing away and farthest away from the electrode assembly; the stepped hole comprises a first hole segment and a second hole segment that are continuously arranged; the first hole segment is arranged on the first surface, and the second hole segment is arranged on a side of the first hole segment that is closer to the electrode assembly; and
a sealing component, at least partially arranged within the second hole segment, wherein the sealing component is welded and connected to the electrode terminal, and forms a welding portion at a welding location, wherein
the first hole segment is configured to accommodate at least a portion of the welding portion so that the welding portion does not protrude from the first surface.

2. The battery cell according to claim 1, wherein the sealing component comprises a main body region and an edge region; the edge region is arranged around the main body region; and the welding portion is connected to the edge region, and protrudes at least partially from a bottom surface of the first hole segment.

3. The battery cell according to claim 2, wherein along the thickness direction, the edge region is provided with a second surface that is facing away and farthest away from the electrode assembly, and the second surface is aligned with the bottom surface of the first hole segment.

4. The battery cell according to claim 2, wherein along the thickness direction, the edge region is provided with a second surface that is facing away and farthest away from the electrode assembly, and the second surface is arranged between the first surface and the bottom surface of the first hole segment.

5. The battery cell according to claim 4, wherein the edge region is provided with a first outer peripheral surface connected to the second surface, and the welding portion is connected to the first outer peripheral surface and the bottom surface of the first hole segment.

6. The battery cell according to claim 4 or 5, wherein along the thickness direction, a distance between the second surface and the bottom surface of the first hole segment is denoted as H₁, satisfying: H₁≤0.1mm.

7. The battery cell according to any one of claims 3 to 6, wherein a distance between the second surface and the first surface is denoted as H₂, satisfying: H₂≥0.1mm.

8. The battery cell according to any one of claims 2 to 7, wherein along the thickness direction, the main body region is provided with a third surface that is backed from the electrode assembly, and the third surface is a surface of the sealing component farthest from the electrode assembly; and the third surface is aligned with the first surface, or the third surface is closer to the electrode assembly than the first surface.

9. The battery cell according to claim 8, wherein the sealing component is provided with a groove that is recessed from the third surface toward a direction closer to the electrode assembly; and the groove is provided around the main body region and the edge region is provided around the groove.

10. The battery cell according to any one of claims 2 to 9, wherein the welding portion is a ring-shaped structure provided around the edge region.

11. The battery cell according to any one of claims 1 to 10, wherein along the thickness direction, the sealing component is provided with a third surface that is facing away and farthest away from the electrode assembly;
the third surface is aligned with the first surface, or the third surface is closer to the electrode assembly than the first surface.

12. The battery cell according to any one of claims 1 to 11, wherein along the thickness direction, a distance between a bottom surface of the first hole segment and the first surface is denoted as H₃, satisfying: H₃≥0.1mm.

13. The battery cell according to any one of claims 1 to 12, wherein a hole side surface of the second hole segment is inclined, and the hole side surface of the second hole segment is provided at an obtuse angle to a bottom surface of the second hole segment.

14. The battery cell according to claim 13, wherein the hole side surface of the second hole segment is connected to a bottom surface of the first hole segment and forms a sharp angle at a connection position.

15. The battery cell according to claim 13 or 14, wherein the hole side surface of the second hole segment is a conical surface.

16. The battery cell according to any one of claims 13 to 15, wherein an outer peripheral surface of the sealing component comprises an inclined surface, and the inclined surface is arranged by facing towards the hole side surface of the second hole segment.

17. The battery cell according to claim 16, wherein along the thickness direction, the sealing component is provided with an abutting surface, wherein the abutting surface abuts against the bottom surface of the second hole segment; and
an angle between the abutting surface and the inclined surface is denoted as θ₁, and an angle between the hole side surface of the second hole segment and the bottom surface of the second hole segment is denoted as θ₂, satisfying θ₁ > θ₂.

18. The battery cell according to any one of claims 1 to 17, wherein the stepped hole further comprises a third hole segment, and the third hole segment is arranged on a bottom surface of the second hole segment; and the sealing component abuts against the bottom surface of the second hole segment.

19. The battery cell according to any one of claims 1 to 18, wherein along the thickness direction, the electrode terminal is provided with a fourth surface facing and closest to the electrode assembly; and
the electrode terminal is provided with a dielectric injection hole, with one end of the dielectric injection hole extending to the fourth surface, and the other end of the dielectric injection hole communicating with the stepped hole; and the dielectric injection hole is configured to inject an electrolyte into an interior of the battery cell.

20. The battery cell according to any one of claims 1 to 19, wherein the electrode terminal comprises a main body portion, a first limiting portion, and a second limiting portion; and
along the thickness direction, the first limiting portion and the second limiting portion are connected to both ends of the main body portion, respectively; the main body portion passes through the wall portion, and the wall portion is at least partially located between the first limiting portion and the second limiting portion to restrict a movement of the electrode terminal relative to the wall portion; and the first surface is a surface of the first limiting portion facing away from the second limiting portion.

21. The battery cell according to any one of claims 1 to 20, wherein the casing comprises a shell and an end cap; and
the shell comprises a side wall and the wall portion which are integrally molded, wherein the side wall surrounds the wall portion; along the thickness direction, the wall portion is arranged at one end of the side wall; and the other end of the side wall forms an opening, wherein the opening is sealed by the end cap.

22. A battery, comprising the battery cell according to any one of claims 1 to 21.

23. The battery according to claim 22, wherein the battery comprises a busbar component and multiple battery cells; the multiple battery cells are electrically connected through the busbar component, and the busbar component abuts against the first surface and is welded and connected to the sealing component.

24. An electrical device, comprising the battery according to claim 22 or 23.
